# EUROPÄISCHE PATENTSCHRIFT

(11) **EP 3 140 571 B1**
(45) Veröffentlichungstag und Bekanntmachung des Hinweises auf die Patenterteilung: **22.05.2019**
(21) Anmeldenummer: 15709951.6
(22) Anmeldetag: 16.03.2015
(51) Int. Cl.: F16H 63/18

(54) **SCHALTWALZE FÜR EIN SCHALTGETRIEBE EINES KRAFTFAHRZEUGS SOWIE SCHALTGETRIEBE MIT EINER SOLCHEN SCHALTWALZE**
SELECTOR DRUM FOR A SHIFT TRANSMISSION OF A MOTOR VEHICLE, AND SHIFT TRANSMISSION WITH SUCH A SELECTOR DRUM
CYLINDRE DE COMMANDE DESTINÉ À LA BOÎTE DE VITESSES D'UN VÉHICULE AUTOMOBILE AINSI QUE BOÎTE DE VITESSES MUNIE DUDIT CYLINDRE DE COMMANDE

(30) Priorität: 07.05.2014 DE 102014208493
(43) Veröffentlichungstag der Anmeldung: 15.03.2017
(73) Patentinhaber: Bayerische Motoren Werke Aktiengesellschaft, 80809 München (DE)
(72) Erfinder: SEMET, Wolfgang, 85276 Pfaffenhofen (DE)
(86) Internationale Anmeldenummer: PCT/EP2015/055410
(87) Internationale Veröffentlichungsnummer: WO 2015/169490

(56) Entgegenhaltungen:
- EP-A1- 1 770 315
- DE-A1- 19 516 651
- DE-A1- 19 911 274
- FR-A1- 2 639 415
- JP-A- S58 121 339
- JP-A- S59 133 854

## Beschreibung

Die Erfindung betrifft eine Schaltwalze für ein Schaltgetriebe eines Fahrzeugs, mit einem im Wesentlichen zylindrischen Walzenkörper, der um eine Längsachse drehbar ist und auf einer radialen Außenseite eine Führungsnut aufweist, in welche ein Betätigungsstift einer Schaltgabel des Schaltgetriebes eingreifen kann, wobei die Führungsnut einen aktiven Nutbereich aufweist, der eine axiale Bewegung der Schaltgabel definiert, und einen inaktiven Nutbereich, der eine axial feste Neutralstellung der Schaltgabel definiert. Darüber hinaus umfasst die Erfindung auch ein Schaltgetriebe eines Kraftfahrzeugs mit einer solchen Schaltwalze.

Bei Kraftfahrzeug-Schaltgetrieben, insbesondere klauengeschalteten oder synchronisierten Schaltgetrieben, erfolgt ein Gangwechsel in der Regel durch Schaltgabeln, welche zum Beispiel Schieberäder oder Schaltmuffen des Schaltgetriebes bewegen. Motorräder sind üblicherweise mit einem sequentiellen, klauengeschalteten Getriebe ausgestattet, bei dem die Schaltgabeln durch eine Schaltwalze axial verschoben werden. An einer radialen Außenseite der Schaltwalze sind Führungsnuten vorgesehen, in die jeweils ein Betätigungsstift einer Schaltgabel eingreift. Durch eine Drehbewegung der Schaltwalze um einen definierten Winkel wird bei geeignetem Nutverlauf in Nutlängsrichtung die zugeordnete Schaltgabel axial so verschoben, dass das Getriebe von einem Gang in einen anderen Gang schaltet.

Aus dem Stand der Technik sind Schaltwalzen mit Führungsnuten bereits allgemein bekannt, wobei ein Verlauf des aktiven Nutbereichs der Führungsnuten in der Abwicklung der zylindrischen Mantelfläche in Nutlängsrichtung durch eine Kombination von Geraden- und Kreisbogenabschnitten festgelegt ist. Derartige Schaltwalzen sind insbesondere in der gattungsgemäßen EP 1 770 315 A1, der DE 195 16 651 A1 sowie der DE 199 11 274 A1 gezeigt.

Ferner ist zum Beispiel aus der JP S59 133854 A eine Schaltwalze für ein Schaltgetriebe eines Fahrzeugs mit Führungsnuten bekannt.

Aufgabe der vorliegenden Erfindung ist es, eine Schaltwalze zu schaffen, die in einem Kraftfahrzeug-Schaltgetriebe zu einem geräuschreduzierten und besonders verschleißarmen Schaltvorgang beiträgt.

Diese Aufgabe wird erfindungsgemäß gelöst durch eine Schaltwalze der eingangs genannten Art, bei der ein Nutverlauf zumindest des aktiven Nutbereichs der Führungsnut durch Parabelabschnitte und/oder eine Spline-Funktion wenigstens zweiten Grades festgelegt ist. Während es bei aus dem Stand der Technik bekannten Führungsnuten zu unerwünschten Beschleunigungs- und damit Kraftspitzen an den jeweils zugeordneten Schaltgabeln kommt, führt ein in der Abwicklung des Walzenkörpers abschnittsweise parabelförmiger Nutverlauf bei einer Drehbewegung der Schaltwalze mit konstanter Winkelgeschwindigkeit zu einer abschnittsweise konstanten Axialbeschleunigung der Schaltgabel, was zu einem besonders geräusch- und verschleißarmen Schaltverhalten des Getriebes beiträgt. Wird der Nutverlauf stückweise aus Polynomen zusammengesetzt, so ist die zugrundeliegende Spline-Funktion vorzugsweise so gewählt, dass sich abschnittsweise eine annähernd konstante Axialbeschleunigung der Schaltgabeln und darüber hinaus im Bereich zwischen den annähernd konstanten Beschleunigungsabschnitten stetige Übergänge und keine unstetigen Beschleunigungssprünge ergeben. Spline-Funktionen wenigstens zweiten Grades sind stückweise aus Polynomen wenigstens zweiten Grades zusammengesetzt und auch an den Übergangsstellen zweier Polynomstücke stetig differenzierbar. In Bezug auf die Beschleunigung der Schaltgabel ermöglicht dies einen abschnittsweise weitgehend konstanten Beschleunigungsverlauf sowie einen vorteilhaften stetigen Übergang zwischen den weitgehend konstanten Beschleunigungsabschnitten.

Vorzugsweise ist ein Nutverlauf des inaktiven Nutbereichs der Führungsnut durch eine Gerade festgelegt, die sich senkrecht zur Längsachse erstreckt und stetig differenzierbar in einen der Parabelabschnitte und/oder die Spline-Funktion übergeht. Dies bedeutet, dass es auch im Übergangsbereich zwischen einem aktiven Nutbereich und einem inaktiven Nutbereich nicht zu unerwünschten Beschleunigungsspitzen der jeweils zugeordneten Schaltgabel kommt.

In einer Ausführungsform der Schaltwalze ist ein Nutverlauf des aktiven Nutbereichs der Führungsnut durch Parabelabschnitte, vorzugsweise ausschließlich durch Parabelabschnitte festgelegt, wobei dem aktiven Nutbereich wenigstens ein schaltbarer Gang und jedem Gang genau vier Parabelabschnitte zugeordnet sind. Diese Parabelabschnitte sorgen während eines Schaltvorgangs des Schaltgetriebes für einen abschnittsweise linearen Geschwindigkeitsverlauf sowie einen abschnittsweise konstanten Beschleunigungsverlauf der zugeordneten Schaltgabel, was sich in Sachen Geräusch- und Verschleißminimierung als besonders vorteilhaft herausgestellt hat. Vorzugsweise sind zum Einlegen und Auslegen jedes Gangs jeweils zwei Parabelabschnitte vorgesehen, nämlich ein Parabelabschnitt zum konstanten Beschleunigen und ein Parabelabschnitt zum konstanten Abbremsen der Schaltgabel.

Insbesondere ist ein Nutverlauf des aktiven Nutbereichs der Führungsnut durch Parabelabschnitte festgelegt, wobei alle Parabelabschnitte vorzugsweise kongruent sind. Dadurch ergeben sich während eines Schaltvorgangs der zugeordneten Schaltgabel stets betragsmäßig identische Beschleunigungs- bzw. Verzögerungswerte.

Im Übrigen wird die Aufgabe erfindungsgemäß auch gelöst durch ein Schaltgetriebe eines Kraftfahrzeugs, mit einer oben beschriebenen Schaltwalze und wenigstens einer Schaltgabel, die einen Betätigungsstift aufweist, wobei der Betätigungsstift in die Führungsnut der Schaltwalze eingreift.

Besonders bevorzugt handelt es sich bei dem Schaltgetriebe um ein fußbetätigtes sequentielles Schaltgetriebe eines Motorrads.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figur 1 einen Ausschnitt eines herkömmlichen Schaltgetriebes in perspektivischer Explosionsansicht mit einer herkömmlichen Schaltwalze; und
- Figur 2 einen Ausschnitt der Abwicklung einer erfindungsgemäßen Schaltwalze im Bereich einer Führungsnut.

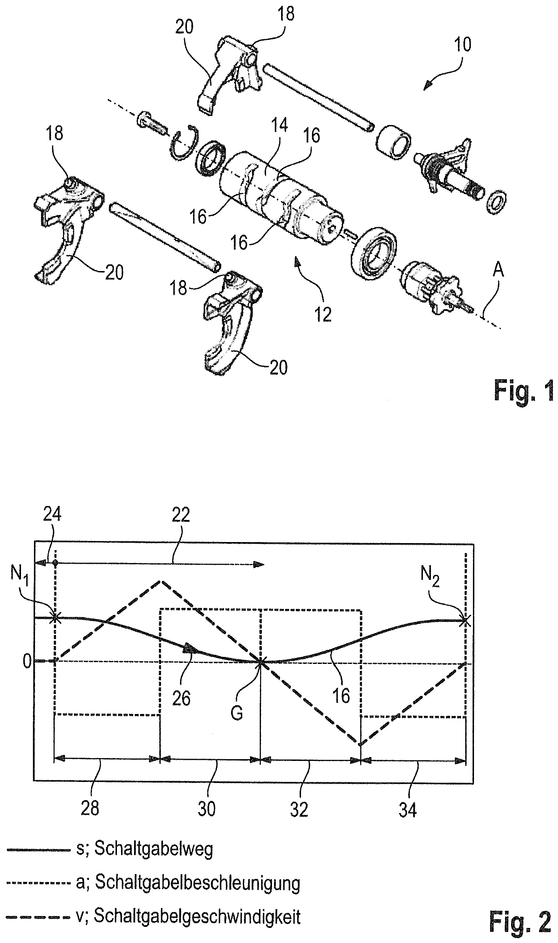

Die Figur 1 zeigt einen Ausschnitt eines herkömmlichen Schaltgetriebes 10, konkret eines fußbetätigten, sequenziellen Schaltgetriebes 10 eines Motorrads.

Das Schaltgetriebe 10 umfasst eine Schaltwalze 12 mit einem zylindrischen Walzenkörper 14, der um eine Längsachse A drehbar ist und auf einer radialen Außenseite eine Führungsnut 16 aufweist, in welche ein Betätigungsstift 18 einer Schaltgabel 20 des Schaltgetriebes 10 eingreifen kann. Darüber hinaus umfasst das Schaltgetriebe 10 wenigstens eine Schaltgabel 20, die einen Betätigungsstift 18 aufweist, wobei dieser Betätigungsstift 18 im zusammengesetzten Zustand des Schaltgetriebes 10 in die Führungsnut 16 der Schaltwalze 12 eingreift.

Im dargestellten Ausführungsbeispiel sind drei Schaltgabeln 20 vorgesehen, denen jeweils zwei Gänge zugeordnet sind, sodass es sich bei dem Schaltgetriebe 10 um ein Sechsganggetriebe eines Motorrads handelt.

Jeder Schaltgabel 20 des Schaltgetriebes 10 ist eine Führungsnut 16 in der Schaltwalze 12 zugeordnet, sodass der Walzenkörper 14 gemäß Figur 1 drei Führungsnuten 16 umfasst.

Jede Führungsnut 16 weist einen sogenannten "aktiven" Nutbereich 22 auf, der eine axiale Bewegung der zugeordneten Schaltgabel 20 definiert, und einen sogenannten "inaktiven" Nutbereich 24, der eine axial feste Neutralstellung der Schaltgabel 20 definiert. Entsprechend ist in der Abwicklung des Walzenkörpers 14 ein Nutverlauf des inaktiven Nutbereichs 24 der Führungsnut 16 in Nutlängsrichtung 26 durch eine Gerade festgelegt, die sich senkrecht zur Längsachse A erstreckt.

Da die Konstruktion und Funktionsweise solcher sequentieller Schaltgetriebe 10 allgemein bekannt sind, wird darauf im Folgenden nicht näher eingegangen.

Bei herkömmlichen Walzenkörpern sind die Führungsnuten in der Abwicklung aus geraden und kreisbogenförmigen Nutabschnitten zusammengesetzt. Bei einer Drehbewegung der Schaltwalze 12 um die Längsachse A mit konstanter Winkelgeschwindigkeit erzeugen die Kreisbogenabschnitte axiale Beschleunigungs- und damit Kraftspitzen in der jeweils zugeordneten Schaltgabel 20. Dies führt sowohl zu unerwünscht lauten Schaltgeräuschen und einem unerwünscht hohen Verschleiß des Schaltgetriebes als auch zu einer vom Fahrer als unangenehm empfundenen Beeinträchtigung des Schaltkomforts.

Eine Schaltwalze 12 gemäß der Erfindung unterscheidet sich von der Schaltwalze 12 gemäß Figur 1 ausschließlich durch einen Nutverlauf s der Führungsnut 16, welcher nachfolgend näher beschrieben wird.

Die Figur 2 zeigt einen Ausschnitt der Abwicklung des Walzenkörpers 14 einer erfindungsgemäßen Schaltwalze 12 im Bereich einer Führungsnut 16. Der Nutverlauf s der Führungsnut 16 ist dabei als durchgezogene Linie dargestellt, während eine Axialgeschwindigkeit v und eine Axialbeschleunigung a der zugeordneten Schaltgabel 20 für eine Drehbewegung der Schaltwalze 12 mit konstanter Winkelgeschwindigkeit gestrichelt bzw. gepunktet abgebildet sind. Wird der Figur 2 ein Koordinatensystem hinterlegt, bei dem auf der Abszisse ein Umfang des Walzenkörpers 14 aufgetragen ist, so gibt die Ordinate des Nutverlaufs s die axiale Verschiebung der Schaltgabel 20 wieder.

Erfindungswesentlich ist, dass der Nutverlauf s zumindest des aktiven Nutbereichs 22 der Führungsnut 16 in Nutlängsrichtung 26 durch Parabelabschnitte 28, 30, 32, 34 und/oder eine Spline-Funktion festgelegt ist, wobei es sich bei der Spline-Funktion bevorzugt um eine Spline-Funktion wenigstens zweiten Grades handelt.

Konkret ist der Nutverlauf s des aktiven Nutbereichs 22 der Führungsnut 16 gemäß Figur 2 in der Abwicklung des Walzenkörpers 14 durch Parabelabschnitte 28, 30, 32, 34 festgelegt. Diese Parabelabschnitte 28, 30, 32, 34 gehen jeweils unmittelbar und knickfrei ineinander über, sodass der aktive Nutbereich 22 ausschließlich durch die Parabelabschnitte 28, 30, 32, 34 festgelegt und der Nutverlauf s in allen Punkten stetig differenzierbar ist.

Im dargestellten Ausführungsbeispiel ist sogar der Nutverlauf s der gesamten Führungsnut 16 einschließlich aller aktiven Nutbereiche 22 und inaktiven Nutbereiche 24 durch eine in allen Punkten stetig differenzierbare Funktion festgelegt. Dies wird gemäß Figur 2 dadurch erreicht, dass der Nutverlauf s des inaktiven Nutbereichs 24 der Führungsnut 16 durch ein Geradenstück definiert ist, welches sich senkrecht zur Längsachse A erstreckt und in einem Punkt N₁ stetig differenzierbar in den Parabelabschnitt 28 übergeht.

Vorzugsweise sind dem aktiven Nutbereich 22 der Führungsnut 16 genau zwei schaltbare Gänge zugeordnet, wobei die entsprechende Schaltgabel 20 ausgehend von einer mittigen Neutralstellung in axial entgegengesetzte Schaltstellungen bewegt werden kann.

Jedem Gang sind wiederum genau vier Parabelabschnitte 28, 30, 32, 34 zugeordnet (siehe Figur 2), wobei die Axialbeschleunigung a der Schaltgabel 20 innerhalb jedes Parabelabschnitts 28, 30, 32, 34 aufgrund der Parabelform konstant ist. Außerdem sind die Parabelabschnitte 28, 30, 32, 34 kongruent, sodass die Axialbeschleunigung a der Schaltgabel 20 über alle Parabelabschnitte 28, 30, 32, 34 hinweg einen betragsmäßig konstanten Wert annimmt.

Folglich findet die Axialverschiebung der Schaltgabel 20 während eines Schaltvorgangs jeweils geräusch- und verschleißreduziert mit einer betragsmäßig konstanten Beschleunigung bzw. Verzögerung statt.

Gemäß Figur 2 wird zum Beispiel ausgehend von einer Neutralstellung der zugeordneten Schaltgabel 20 im Punkt N₁ über einen ersten Parabelabschnitt 28 und einen zweiten Parabelabschnitt 30 der Führungsnut 16 ein der Schaltgabel 20 zugeordneter Gang eingelegt, der im Punkt G geschaltet ist. Beim Einlegen des Gangs erfährt die Schaltgabel 20 dabei im Bereich des ersten Parabelabschnitts 28 zunächst eine konstante Beschleunigung und nachfolgend im Bereich des zweiten Parabelabschnitts 30 eine (betragsgleiche) konstante Verzögerung.

Anschließend wird der geschaltete Gang über einen dritten Parabelabschnitt 32 und einen vierten Parabelabschnitt 34 der Führungsnut 16 wieder ausgelegt, sodass die Schaltgabel 20 in einem Punkt N₂ wieder ihre mittige Neutralstellung einnimmt. Wie beim Einlegen des Gangs erfährt die Schaltgabel 20 auch beim Auslegen des Gangs im Bereich des dritten Parabelabschnitts 32 zunächst eine konstante Beschleunigung und nachfolgend im Bereich des vierten Parabelabschnitts 34 eine (betragsgleiche) konstante Verzögerung.

Infolge der betragsmäßig konstanten Axialbeschleunigung a der Schaltgabel 20 während des Schaltvorgangs ergibt sich eine "ruckfreie" Axialbewegung, wodurch Geräusche minimiert sowie Kraftspitzen in der Schaltgabel 20 vermieden und damit der Verschleiß reduziert werden.

Ferner ergibt sich durch einen solchen Nutverlauf s der Führungsnuten 16 ein hoher Schaltkomfort, insbesondere wenn es sich bei dem Schaltgetriebe 10 um ein fußbetätigtes, sequentielles Schaltgetriebe 10 eines Motorrads handelt.

Ist der Nutverlauf s des aktiven Nutbereichs 22 der Führungsnut 16 in der Abwicklung alternativ durch eine Spline-Funktion wenigstens zweiten Grades festgelegt, werden die Polynomstücke der Spline-Funktion so gewählt, dass sich analog zu Figur 2 abschnittsweise ein weitgehend konstanter Verlauf der Axialbeschleunigung a ergibt und unerwünschte Kraftspitzen entsprechend vermieden werden. Ferner ist die Spline-Funktion bevorzugt so gewählt, dass sich zwischen den weitgehend konstanten Beschleunigungsabschnitten ein vorteilhafter stetiger Verlauf der Axialbeschleunigung ergibt, sodass Beschleunigungssprünge gemäß Figur 2 vermieden werden.

## Patentansprüche

1. Schaltwalze für ein Schaltgetriebe (10) eines Kraftfahrzeugs, mit
einem im Wesentlichen zylindrischen Walzenkörper (14), der um eine Längsachse (A) drehbar ist und auf einer radialen Außenseite eine Führungsnut (16) aufweist, in welche ein Betätigungsstift (18) einer Schaltgabel (20) des Schaltgetriebes (10) eingreifen kann,
wobei die Führungsnut (16) einen aktiven Nutbereich (22) aufweist, der eine axiale Bewegung der Schaltgabel (20) definiert, und einen inaktiven Nutbereich (24), der eine axial feste Neutralstellung der Schaltgabel (20) definiert,
**dadurch gekennzeichnet, dass** ein Nutverlauf (s) zumindest des aktiven Nutbereichs (22) der Führungsnut (16) durch Parabelabschnitte (28, 30, 32, 34) und/oder eine Spline-Funktion wenigstens zweiten Grades festgelegt ist.

2. Schaltwalze nach Anspruch 1, **dadurch gekennzeichnet, dass** ein Nutverlauf (s) des inaktiven Nutbereichs (24) der Führungsnut (16) durch eine Gerade festgelegt ist, die sich senkrecht zur Längsachse (A) erstreckt und stetig differenzierbar in einen der Parabelabschnitte (28, 30, 32, 34) und/oder die Spline-Funktion übergeht.

3. Schaltwalze nach Anspruch 1 oder 2, **dadurch gekennzeichnet, dass** der Nutverlauf (s) des aktiven Nutbereichs (22) der Führungsnut (16) durch Parabelabschnitte (28, 30, 32, 34) festgelegt ist, wobei dem aktiven Nutbereich (22) wenigstens ein schaltbarer Gang und jedem Gang genau vier Parabelabschnitte (28, 30, 32, 34) zugeordnet sind.

4. Schaltwalze nach einem der vorhergehenden Ansprüche, **dadurch gekennzeichnet, dass** der Nutverlauf (s) des aktiven Nutbereichs (22) der Führungsnut (16) durch Parabelabschnitte (28, 30, 32, 34) festgelegt ist, wobei alle Parabelabschnitte (28, 30, 32, 34) kongruent sind.

5. Schaltgetriebe eines Kraftfahrzeugs, mit
einer Schaltwalze (12) nach einem der vorhergehenden Ansprüche, und
einer Schaltgabel (20), die einen Betätigungsstift (18) aufweist,
wobei der Betätigungsstift (18) in die Führungsnut (16) der Schaltwalze (12) eingreift.

6. Schaltgetriebe nach Anspruch 5, **dadurch gekennzeichnet, dass** das Schaltgetriebe (10) ein fußbetätigtes, sequentielles Schaltgetriebe (10) eines Motorrads ist.

## Claims

1. A gear selector drum for a manual transmission (10) of a motor vehicle, having
a substantially cylindrical drum body (14) which is rotatable about a longitudinal axis (A) and has a guide groove (16) on a radial outer side, in which groove an actuating pin (18) of a selector fork (20) of the manual transmission (10) can engage,
wherein the guide groove (16) has an active groove region (22) which defines an axial movement of the selector fork (20), and an inactive groove region (24) which defines an axially fixed neutral position of the selector fork (20),
**characterised in that** a groove profile (s) at least of the active groove region (22) of the guide groove (16) is defined by parabola portions (28, 30, 32, 34) and/or an at least second-degree spline function.

2. A gear selector drum according to Claim 1, **characterised in that** a groove profile (s) of the inactive groove region (24) of the guide groove (16) is defined by a straight line which extends perpendicularly to the longitudinal axis (A) and merges in a continuously differentiable manner into one of the parabola portions (28, 30, 32, 34) and/or the spline function.

3. A gear selector drum according to Claim 1 or Claim 2, **characterised in that** the groove profile (s) of the active groove region (22) of the guide groove (16) is defined by parabola portions (28, 30, 32, 34), with at least one selectable gear being associated with the active groove region (22) and precisely four parabola portions (28, 30, 32, 34) being associated with each gear.

4. A gear selector drum according to one of the preceding claims, **characterised in that** the groove profile (s) of the active groove region (22) of the guide groove (16) is defined by parabola portions (28, 30, 32, 34), all the parabola portions (28, 30, 32, 34) being congruent.

5. A manual transmission of a motor vehicle, with
a gear selector drum (12) according to one of the preceding claims, and
a selector fork (20) which has an actuating pin (18),
wherein the actuating pin (18) engages in the guide groove (16) of the gear selector drum (12).

6. A manual transmission according to Claim 5, **characterised in that** the manual transmission (10) is a foot-operated, sequential manual transmission (10) of a motorcycle.

## Revendications

1. Rouleau de commutation destiné à une boîte de vitesses (10) d'un véhicule automobile comprenant :
un corps de rouleau (14) essentiellement cylindrique qui est mobile en rotation autour d'un axe longitudinal (A) et comporte, sur sa face radiale externe une rainure de guidage (16) dans laquelle peut venir en prise une goupille d'actionnement (18) d'une fourche de commutation (20) de la boîte de vitesses (10),
la rainure de guidage (16) ayant une zone active (22) qui définit un déplacement axial de la fourche de commutation (20) et une zone inactive (24) qui définit une position axiale neutre fixe de la fourche de commutation (20),
**caractérisé en ce que**
le tracé (s) de la rainure de guidage au moins de la zone active (22) de la rainure de guidage (16) est déterminé par des segments de parabole (28, 30, 32, 34) et/ou par une fonction spline au moins du second degré.

2. Rouleau de commutation conforme à la revendication 1,
**caractérisé en ce que**
le tracé (s) de la zone inactive (24) de la rainure de guidage (16) est déterminé par une droite qui s'étend perpendiculairement à l'axe longitudinal (A) et peut constamment être différenciée en un premier segment de parabole (28, 30, 32, 34) et/ou se prolonge par la fonction spline.

3. Rouleau de commutation conforme à la revendication 1 ou 2,
**caractérisé en ce que**
le tracé (s) de la zone active (22) de la rainure de guidage (16) est déterminé par des segments de parabole (28, 30, 32, 34) et, à la zone active (22) de la rainure de guidage est au moins associé à un rapport de vitesses pouvant être commuté et à chaque rapport de vitesse sont associés exactement quatre segments de parabole (28, 30, 32, 34).

4. Rouleau de commutation conforme à l'une des revendications précédentes,
**caractérisé en ce que**
le tracé (s) de la zone active (22) de la rainure de guidage (16) est défini par des segments de parabole (28, 30, 32, 34) et tous les segments de parabole (28, 30, 32, 34) sont congruents.

5. Boîte de vitesses de véhicule comprenant un rouleau de commutation (12) conforme à l'une des revendications précédentes, et une fourche de commutation (20) qui comporte une goupille d'actionnement (18),
la goupille d'actionnement (18) venant en prise dans la rainure de guidage (16) du rouleau de commutation (12).

6. Boîte de vitesses conforme à la revendication 5,
**caractérisée en ce qu'**
elle est constituée part une boîte de vitesses séquentielle actionnable au pied (10) d'une moto.
